# EUROPEAN PATENT SPECIFICATION

(11) **EP 0 787 866 B1**
(45) Date of publication and mention of the grant of the patent: **12.09.2001**
(21) Application number: 96307534.6
(22) Date of filing: 17.10.1996
(51) Int. Cl.: E04B 2/70, F16B 35/06

(54) **Method of assembling timber walls for a timber house and a clamping element**
Verfahren zur Errichtung von Holzstammwände für ein Baustammhaus und Verbindungselement
Procédé pour l'assemblage de murs de rondins pour une maison en rondins et élément d'assemblage

(30) Priority: 05.02.1996 JP 4207796
(43) Date of publication of application: 06.08.1997
(73) Proprietor: R.C. Core Co., Ltd., Tokyo (JP)
(72) Inventor: Futagi, Kohzoh, c/o R.C. Core Co., Ltd., Shibuya-ku, Tokyo (JP)
(74) Representative: Pearce, Anthony Richmond

(56) References cited:
- EP-A- 0 584 659
- DE-A- 4 011 066
- US-A- 4 147 000
- US-A- 4 636 125
- US-A- 4 928 531
- US-A- 5 400 845

## Description

In the prior art, timbers (lengths of wood) which have been stacked one on top of another to form a wall of a timber house are secured together at each of a number of locations by a single long bolt running through all the timbers, while a wood dowel is inserted into each timber wall. A base timber is firmly secured to a foundation base by screws. Timber to be used for a timber house has an inferior dryness in comparison with general architectural lumber. Although the degree of dryness is dependent upon the climate or season of building sites, the timber tends to incur some shrinkage in dry periods, and thus the height of the timber wall becomes unavoidably lower after accumulation of the shrinkage imposed on each timber. For example, timber used for timber houses generally has a water content of between 19% and 30%, resulting in shrinkage of the timber by between 1.5% and 4% in due course. Accordingly, in the case where 15 timbers, each 178mm in depth, are stacked to produce a timber wall, this wall is predicted to decrease its total height by between 40mm and 107mm after the drying process. On the other hand, even if laminated wood material, which has a lower water content and therefore low shrinkage ratio is used, it is still unavoidable to incur less than 0.2% shrinkage. Thus, in the example above, the shrinkage of the wall would still be 5.3mm.

This unavoidable shrinkage of timbers has caused various problems for timber-house building. For instance, partition walls, stairs and room fittings, all of which incur almost no shrinkage, are to be provided in the timber house. Therefore, when such interior structures are installed within the timber walls, an allowance has to be made for the eventual discrepancy in height of the timber wall after shrinkage occurs. Therefore, a slide adjusting device of a large size is used so that the difference may be absorbed properly. At the same time, in order to absorb the expected maximum shrinkage, a considerable gap, known as "a settling space", must be reserved between the installed interior structures in the ground floor and the first floor. It is quite troublesome work for timber-house builders to use such a large sized slide adjusting device and to provide a large settling space, and therefore a better solution is needed.

The object of the present invention is to provide a means wherein the use of a large slide adjusting device and the provision of a large settling space are both avoided, by eliminating the defect where the height of the timber wall is decreased by the drying process of the timber material.

According to one aspect of the present invention, there is provided a method of assembling a timber wall for a timber house comprising at a fixing location, the steps of:-
a) securing a base-timber to a base by means of a fixing screw having a screw-threaded shank, the shank having a tapered, screw-threaded region, extending through a hole in the base timber and engaging in the base, said fixing screw having a head including an internally threaded nut portion, and a washer which is disposed between the nut portion and the shank and which presses down against the underlying base timber,
b) locating another timber on the base timber,
c) securing said another timber to the base timber using a clamping bolt having a screw-threaded shank passing through a hole in said another timber and engaging the nut portion of the fixing screw, said clamping bolt having a head including an internally screw-threaded nut portion, and a washer which is disposed between the nut portion and the shank and which presses down against said another timber beneath it, and
d) locating and securing each of further successive timbers on the underlying timbers using further clamping bolts in an analogous manner to steps (b) and (c) until the resultant wall is of the required height.

Preferably the shank, nut portion and washer of the fixing screw and/or clamping bolt are of unitary construction.

At least one sealing strip may be provided between adjacent timbers and alternatively or in addition, a caulking compound may be provided therebetween, so that when the bolt is tightened to clamp the timbers, a seal is provided between said adjacent timbers.

When a gap exists between the shank contained in the hole and the wall of the hole, said gap may permit buckling of the bolt in cases where there is considerable shrinkage of the timbers or an unexpected external shock, and the timber house may be badly affected because the weight of the timber wall is supported only by the clamping bolts. In order to avoid this buckling, it is preferable to provide some buckling-prevention means. The buckling-prevention means may comprise an enlarged diameter region of the shank of the clamping bolt and/or fixing screw. Alternatively, said buckling prevention means may comprise a filler in the hole to eliminate the gap. The filler may be sand or a cylindrical pad or any other material of sufficient strength.

As a further alternative, the buckling-prevention means may comprise a plate extending around the shank of the clamping bolt and/or fixing screw.

Further, the washer may be equipped with a claw or spike which pierces the underside of the overlying timber so as to secure it in position and prevent rotation of the clamping bolt or fixing screw with which it is associated, when the bolt in the overlying timber is rotated.

DE-A-4011066 discloses a clamping element for assembling a timber wall comprising a shank having a screw-threaded region, a head having an internally screw-threaded nut portion itself having an internally threaded recess for receiving a screw-threaded shank of another clamping element, and a washer between the head and shank, the shank having hooks to restrain rotation of the clamping element.

According to a second aspect of the present invention, there is provided a clamping element for use in the method according to the last preceding paragraph but one, comprising a shank having a screw-threaded region, a head having an internally threaded nut portion, said nut portion having an internally threaded recess for receiving a screw-threaded shank of another clamping element, and a washer disposed between said shank and said head, wherein the washer has a claw or spike projecting in a direction away from the shank.

Preferably said shank, head and washer are of unitary construction.

In one embodiment of said second aspect of the present invention, the clamping element is a fixing screw, wherein the shank has a tapered screw-threaded region.

In a second embodiment of said second aspect of the present invention, the clamping element is a clamping bolt, wherein the shank has a screw-threaded region engageable with the internally threaded recess of another clamping element.

According to a third aspect of the present invention, there is provided a kit of parts adapted to be used in a method as claimed in any one of claims 1 to 11, comprising:-
a plurality of timbers;
a plurality of fixing screws each having a shank with a tapered screw-threaded region, a head including an internally threaded nut portion, and
a washer which is disposed between said head and said shank and;
a plurality of clamping bolts each having a shank with a screw-threaded region, a head including an internally screw-threaded nut portion, and a washer which is disposed between said head and said shank.

Embodiments of the present invention will now be described by way of example, with reference to the accompanying drawings wherein:-
Fig 1 is a perspective view to show the securing of timbers by a fixing screw and clamping bolts at a typical fixing location, in accordance with the present invention.
Fig 2 is a cross-sectional view of a detail shown in Fig 1.
Fig 3 is a perspective view of the clamping bolt.
Fig 4 is a side view of the bolt of Fig 3, with part shown in section.
Fig 5 is a schematic view to show the stacked timbers forming a timber wall.
Fig 6 is a perspective view of sealing strip attachment to a timber.
Fig 7 is a perspective view showing the securing of a base timber to a base using a fixing screw.
Fig 8 is a perspective view of the screw of Fig 7.
Fig 9 is a part sectional view of the screw of Figs 7 and 8.
Fig 10 is a perspective view to show a means in the form of a clamping bolt enlargement, to prevent the clamping bolt from being buckled.
Fig 11 is a sectional view to show another means in the form of a plate, to prevent the bolts from being buckled.
Fig 12 is a sectional view to show a further means in the form of a cylindrical pad to prevent the bolts from being buckled.
Fig 13 is a sectional view to show a further means in the form of a filler of sand to prevent bolts from being buckled.

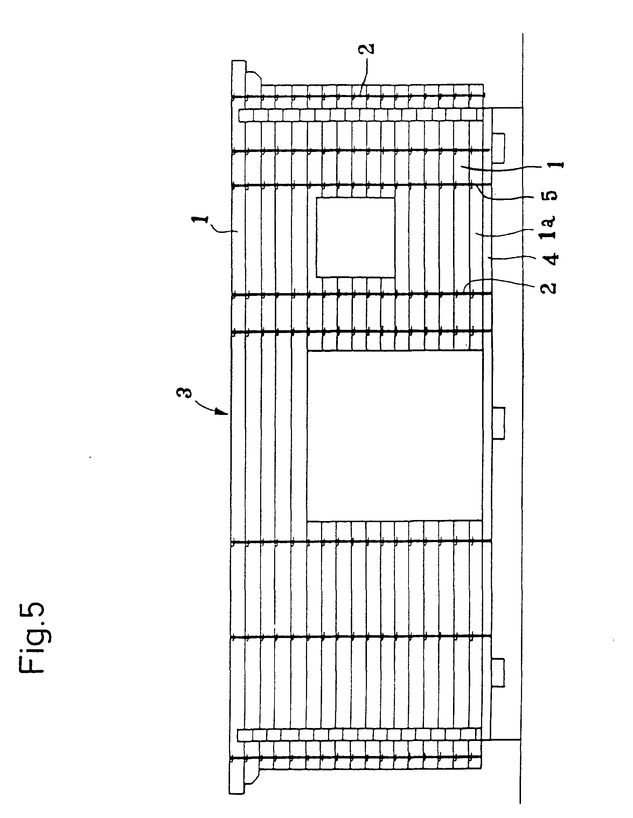

Referring now to Fig 5, a timber wall 3 is completed by the firm securing of a stack of timbers 1 using a mutiplicity of clamping bolts 2. The timbers 1 shown in the drawings are of laminated wood, but a raw log timber may be used.

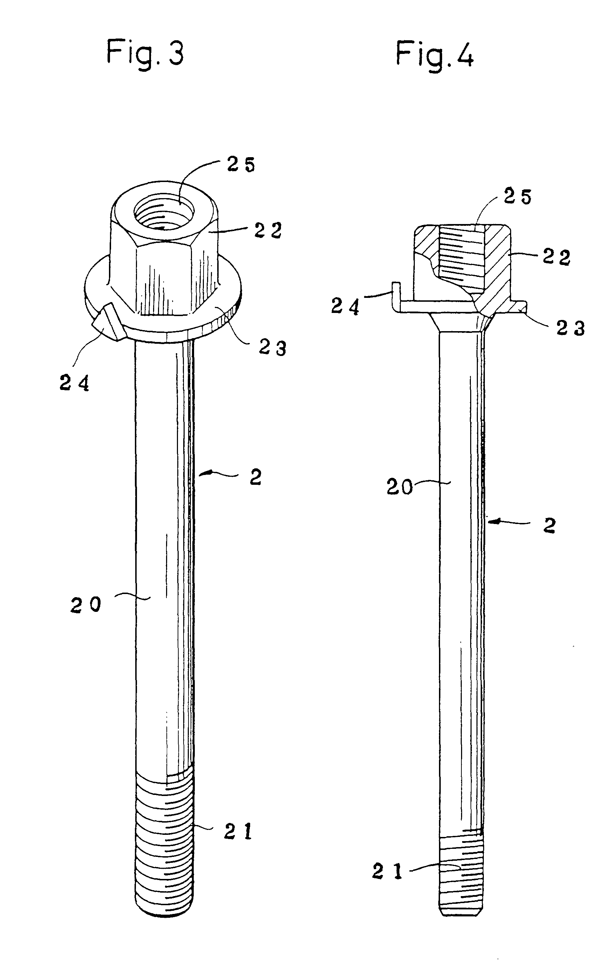

Referring to Fig 3 and Fig 4, the clamping bolt 2 has a shank 20 with a screw-threaded region 21, and a head defined by a nut portion 22 having an internally screw-threaded recess 25, and a washer portion 23 disposed between the shank 20 and the nut portion 22. These three parts, the shank 20, the nut portion 22 and the washer portion 23 are of unitary construction. The internally screw-threaded recess 25 is such so as to be able to receive the screw-threaded region 21 of an identical clamping bolt therein, and thus clamping bolts 2 can be joined one to another by screw-engaging the shank 20 of one with the nut portion 22 of another. A spike 24 extends from the washer portion 23 in a direction away from the shank 20, so that in use, it pierces the underside of the overlying timber 1, whereby rotation of clamping bolt 2 is prevented when the screw-engaged bolt in the overlying timber is rotated. In this embodiment, the shank 20 and the nut portion 22 are integrally formed but it is also possible to produce these two parts separately and then join them together by welding or other suitable method. The clamping bolt 2 to be used in the final top timber does not need an internally threaded recess 25 at all, since further loading is not necessary.

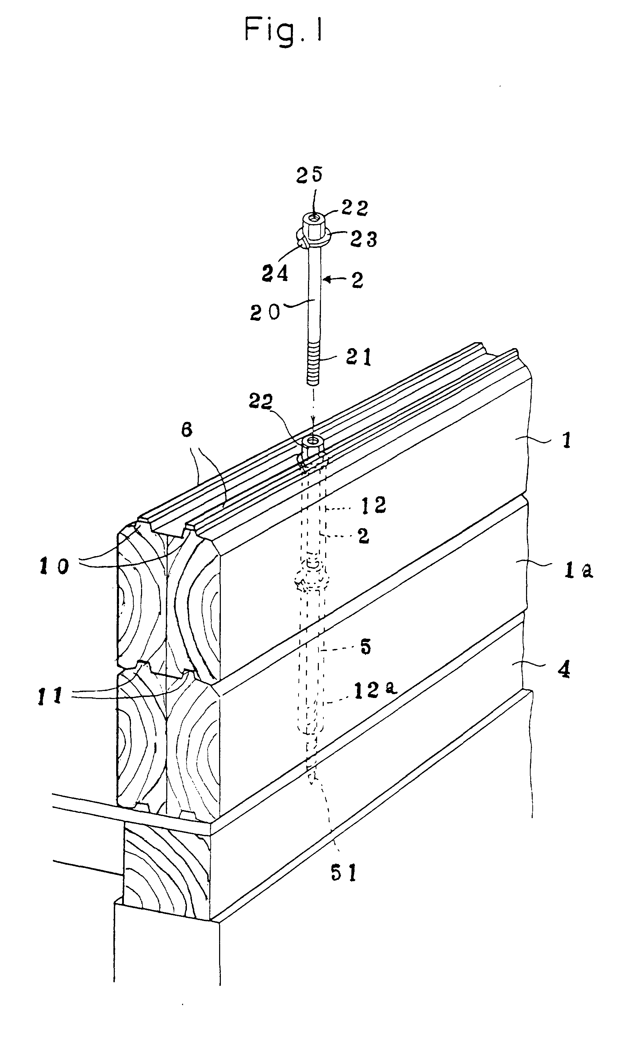

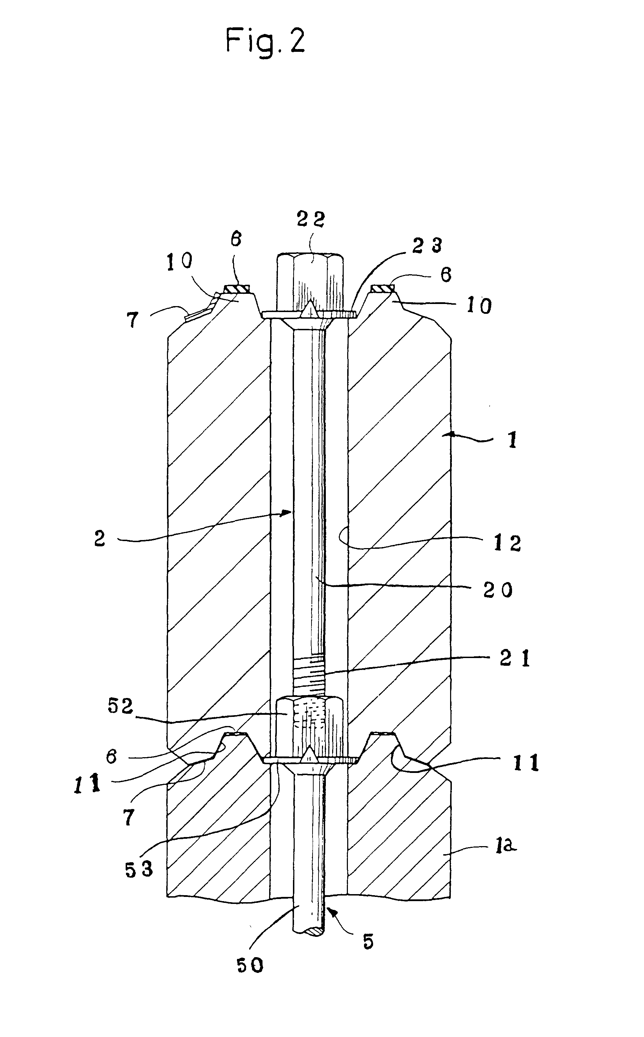

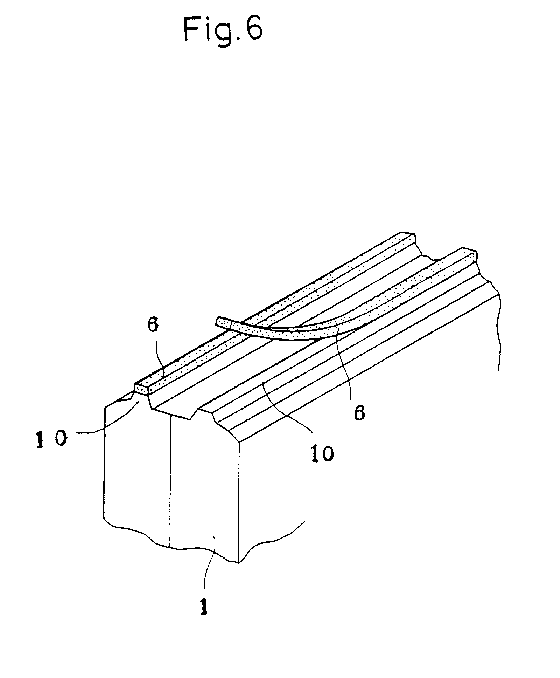

Referring now to Fig 1, Fig 2 and Fig 6, on the top surface of the timber 1, two tongues 10 in the form of long and slender protuberances are formed longitudinally in parallel, a gap therebetween, while on the bottom surface two corresponding grooves 11 are disposed so as to receive the tongues 10. At each fixing location, a hole 12 is provided perpendicularly through the timber 1 between the two tongues 10. The shank 20 of the clamping bolt 2 can be inserted into the hole 12, which has a slightly smaller diameter than the washer 23 but which is of sufficient size to accommodate the nut portion 22. The holes 12 are located at suitable intervals along the length of timbers 1. Thus, when the timbers 1 are secured, the washer 23 presses downward to clamp the underlying timber tightly while it receives the overlying timber correctly. There may be any number of tongues 10 which may be of any suitable shape.

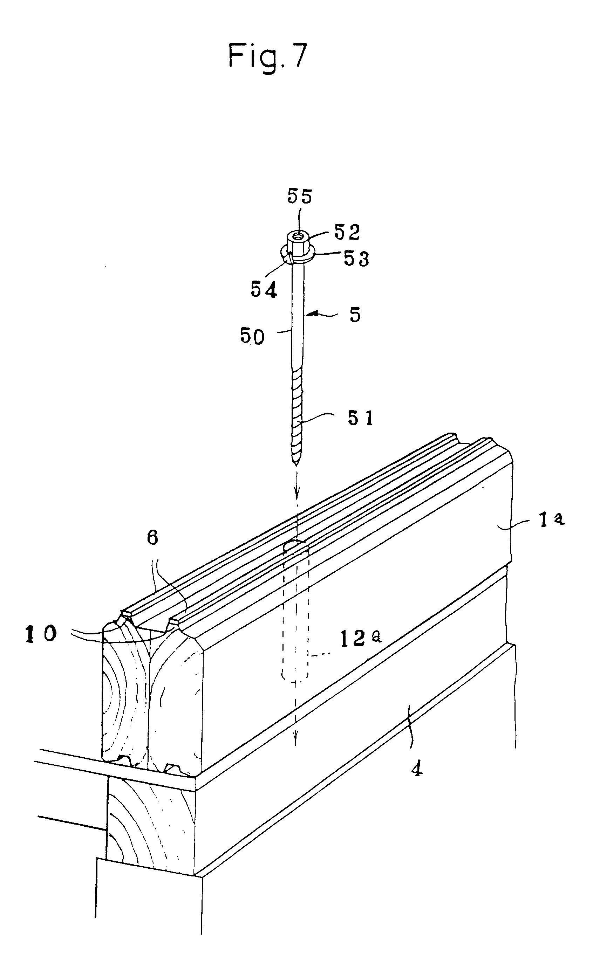

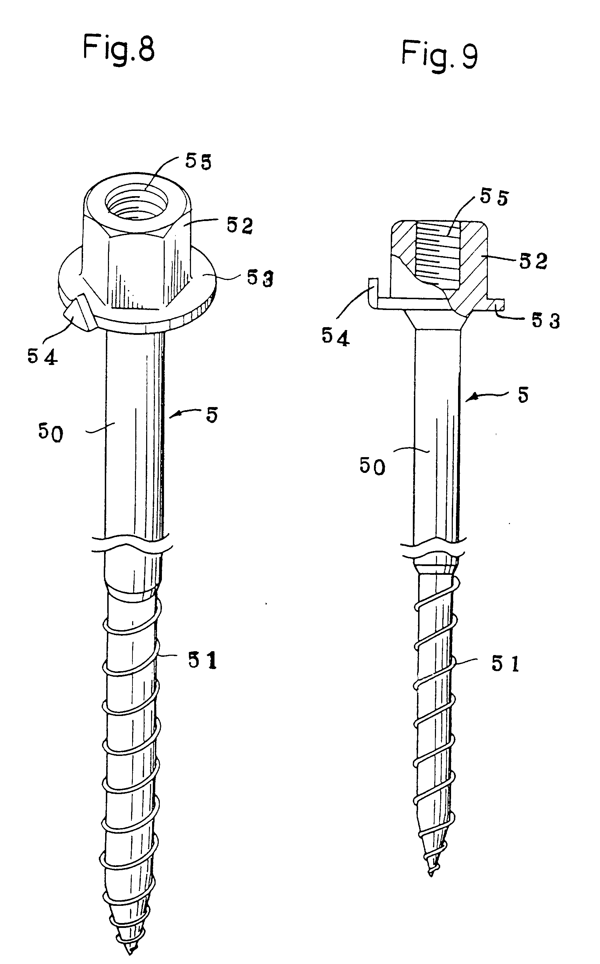

Refering now to Fig 7, the base timber 1a to be located on the base 4, is secured by a fixing screw 5 at each fixing location. As shown in Fig 8 and Fig 9, the fixing screw 5 is similar to the clamping bolt 2, having a shank 50 with a tapering screw-threaded region 51, and a head defined by a nut portion 52 having an internally screw-threaded recess 55, and a washer portion 53 disposed between the shank 50 and the nut portion 52. These three parts, the shank 50, the nut portion 52 and the washer portion 53 are of unitary construction. The internally screw-threaded recess 55 is such so as to be able to receive the screw-threaded region 21 of a clamping bolt therein, and thus clamping bolts 2 can be joined to fixing screws 5 by screw-engaging the shank 20 of the clamping bolt with the nut portion 52 of the fixing screw. A spike 54 extends from the washer portion 53 in a direction away from the shank 50, so that in use, it pierces the underside of the overlying timber 1, whereby rotation of fixing screw 5 is prevented when the screw-engaged bolt in the overlying timber is rotated.

In order to assemble the timber wall, the base timber 1a is placed on the base 4, and fixing screw 5 is inserted into hole 12a, and then fixing screw 5 is screwed into the base 4, so as to provide a firm coupling of base 4 to timber 1a with the washer portion 53 pressing against the underlying timber 1a. After this, sealing strips 6 are affixed to tongues 10 and a caulking compound is provided along the upper surface of timber 1a. Then, the first-storey timber 1 is placed on top of the base timber 1a, and clamping bolt 2 is inserted into hole 12 at each fixing location. Clamping bolt 2 is engaged with screw 5 by engagement of the screw-threaded shank region 21 of the bolt 2 and the internally screw-threaded recess 55 of the screw 5, and thus timbers 1a and 1 are fixedly secured together. In a similar manner, the second storey timber is fixedly secured to the first storey timber, after the sealing strip 6 and the caulking compound 7 have been applied in the same manner as described above. The timbers are stacked one on top of another and secured until the final-storey timber is provided to form a wall of the desired height. The sealing strips 6 existing between each timber are pressed down effectively by the tightness of the clamping bolts 2, and the gap between each timber is eliminated.

After the timber house has been built, the timbers 1a and 1 shrink as they dry. Even when the timbers become dry and shrunk, the lower surface of each timber is engaged and supported by the washers 23 and 53 of the clamping bolt 2 or the fixing screw 5 respectively. Since there is no corresponding shrinkage of bolts 2 and screws 5, the shrinkage effect is only imposed on a single timber, avoiding the formation of large gaps which is a disadvantage of prior-art methods. As a result, the maximum shrinkage of the timber wall is equal to the shrinkage of a single timber, requiring only a small slide adjusting device to adsorb the shrinkage of the single timber and a small settling space.

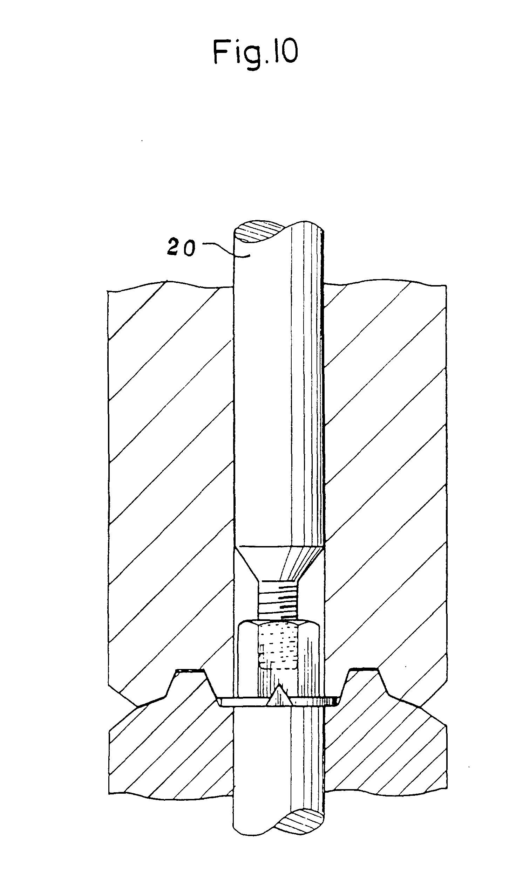

If there is a large shrinkage of the timbers because of insufficient drying prior to or during construction, there will be an extensive gap between the nut portion 22 and the wall of hole 12. In this case, the weight of the timber wall is supported only by the clamping bolt 2 and there is a risk that the clamping bolt 2 may be buckled. Various methods of preventing this buckling are now explained in accordance with Figs 10 to 13.

Referring to Fig 10, the diameter of the unthreaded region of shank 20 in clamping bolt 2 is made almost the same size as hole 12, so that the outer circumference of shank 20 may be in contact with the wall of hole 12. In other words, by this contact, the gap is now eliminated to prevent the bolt 2 from being buckled.

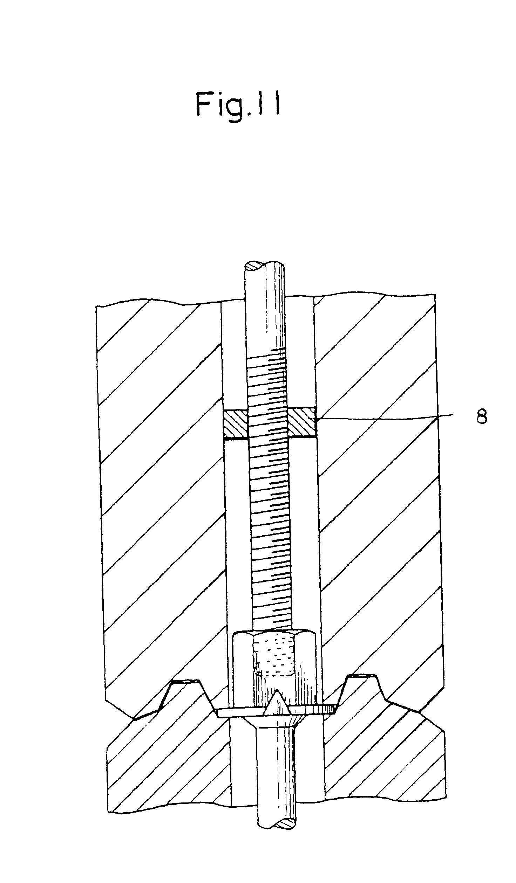

Referring to Fig 11, a buckling-prevention plate 8 extends around the shank 20. The diameter of plate 8 is almost equal to the diameter of hole 12, so the gap is eliminated to prevent the clamping bolt 2 from being buckled.

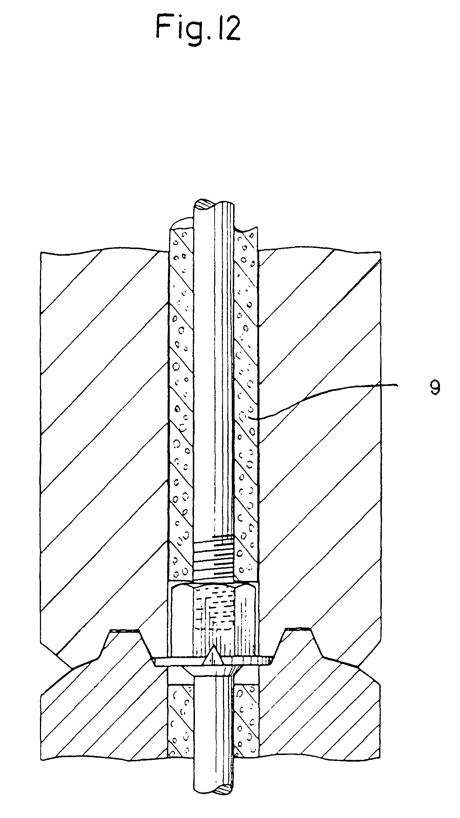

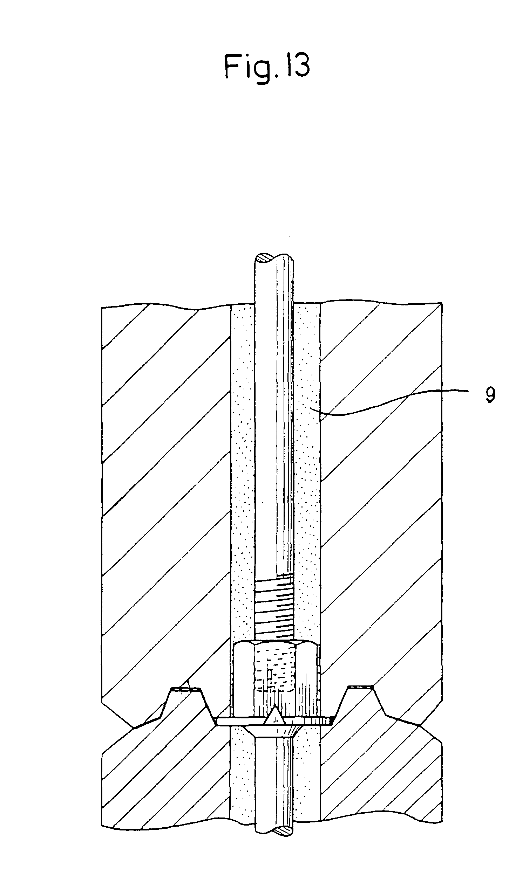

Referring to Figs 12 and 13, a filler 9 is supplied in the gap between the shank 20 and hole 12, and so the gap is eliminated by the filler 9 to prevent the clamping bolt 2 from being buckled. In Fig 12, the filler 9 is a cylindrical pad, while in Fig 13 the filler is sand. The filler 9 is not limited to sand or a cylindrical pad, but may be any material of the required strength.

Advantageously, a timber wall constructed by the method of this invention, is easily disassembled, a piece at a time, since each clamping element 2 or 5 fixes in place only a single timber. During disassembly, the spikes 24 or 54 of the underlying clamping element 2 or 5 into which the shank 20 of the clamping bolt 2 being removed is engaged, pierce the overlying timber, which ensures that there is no rotation of that clamping element, thereby facilitating easy disassembly.

This invention limits the effects of accumulated timber shrinkage in a timber wall to the amount of shrinkage occurring in a single timber. Thus, the invention achieves the minimum ratio value of the imposed shrinkage thereof.

It is to be understood by those skilled in the art that the foregoing description is a preferred embodiment of the disclosed method and device, and that various changes and modifications may be made in the invention within the scope thereof as defined by the appended claims.

## Claims

1. A method of assembling a timber wall (3) for a timber house comprising, at a fixing location, the steps of:-
a) securing a base-timber (1a) to a base (4) by means of a fixing screw (5) having a screw-threaded shank (50), the shank (50) having a tapered, screw-threaded region (51), extending through a hole (12a) in the base timber (1a) and engaging in the base (4), said fixing screw (5) having a head including an internally threaded nut portion (52), and a washer (53) which is disposed between the nut portion (52) and the shank (50) and which presses down against the underlying base timber (1a),
b) locating another timber (1) on the base timber (1a),
c) securing said another timber (1) to the base timber (1a) using a clamping bolt (2) having a screw-threaded shank (20) passing through a hole (12) in said another timber (1) and engaging the nut portion (52) of the fixing screw (5), said clamping bolt (2) having a head including an internally screw-threaded nut portion (22), and a washer (23) which is disposed between the nut portion (22) and the shank (20) and which presses down against said another timber (1) beneath it, and
d) locating and securing each of further successive timbers on the underlying timbers using further clamping bolts in an analogous manner to steps (b) and (c) until the resultant wall is of the required height.

2. The method according to claim 1, **characterised in that** the shank, nut portion and washer of the fixing screw (5) and/or clamping bolt (2) are of unitary construction.

3. The method according to claim 1 or claim 2, comprising the further step of providing between adjacent timbers (1,1a) at least one sealing strip (6), so that when the clamping bolt (2) or screw (5) is tightened to clamp the timber (1,1a), said at least one sealing strip (6) is forcibly compressed to provide a seal between the timbers (1,1a).

4. The method according to any preceding claim, comprising the further step of providing a caulking compound between adjacent timbers (1,1a).

5. The method according to any preceding claim, comprising the further step of providing means for preventing the clamping bolt (2) and/or fixing screw (5) from being buckled in a gap between the shank (20,50) and the wall of the respective hole (12,12a).

6. The method according to claim 5, **characterised in that** said buckling-prevention means comprises an enlarged diameter region of the shank of the clamping bolt (2) and/or fixing screw (5).

7. The method according to claim 5, **characterised in that** said buckling-prevention means comprises a filler (9) in the gap between the clamping bolt (2) and/or fixing screw (5) and the wall of the respective hole (12,12a).

8. The method according to claim 7, **characterised in that** said filler (9) is sand.

9. The method according to claim 7, **characterised in that** said filler (9) is a cylindrical pad.

10. The method according to claim 5, **characterised in that** said buckling-prevention means comprises a plate (8) extending around the shank (20,50) of said clamping bolt (2) and/or fixing screw (5).

11. The method according to any preceding claim, **characterised in that** the washer (23,53) is equipped with a claw or spike (24,54) which pierces the underside of the overlying timber (1) so as to secure it in position and prevent rotation of the clamping bolt or fixing screw (2,5) with which it is associated when the bolt (2) in the overlying timber (1) is rotated.

12. A clamping element (2,5) for use in the method according to claim 11, comprising a shank (20,50) having a screw-threaded region (21,51), a head, having an internally threaded nut portion (22, 52), said nut portion (22, 52) having an internally threaded recess (25, 55) for receiving a screw-threaded shank (21, 51) of another clamping element (2) and a washer (23,53) disposed between said shank (20,50) and said head, wherein the washer (23,53) has a claw or spike (24,54) projecting in a direction away from the shank (20,50).

13. A clamping element according to claim 12, **characterised in that** the shank (20,50), head (22,52) and washer (23,53) are of unitary construction.

14. A clamping element according to claim 12 or 13, which is a fixing screw (5), and wherein the shank (50) has a tapered screw-threaded region (51).

15. A clamping element according to claim 12 or 13, which is a clamping bolt (2), and wherein the shank (20) has a screw-threaded region (21) engageable with the internally threaded recess (25,55) of another clamping element (2,5) .

16. A clamping element according to any of claims 12 to 15, **characterised in that** a plate (8) extends around said shank (20,50) of said clamping element (2,5) .

17. A clamping element according to any of claims 12 to 16 constructed and adapted to be used in the method of any one of claims 1 to 11.

18. A kit of parts adapted to be used in a method as claimed in any one of claims 1 to 11, comprising:-
a plurality of timbers (1,1a);
a plurality of fixing screws (5) each having a shank (50) with a tapered screw-threaded region (51), a head including an internally threaded nut portion (52), and a washer (53) which is disposed between said head and said shank (50) and;
a plurality of clamping bolts (2) each having a shank (20) with a screw-threaded region (21), a head including an internally screw-threaded nut portion 22, and a washer (23) which is disposed between said head and said shank (20).

## Patentansprüche

1. Verfahren zur Montage einer Balkenwand (3) für ein Holzhaus, das, an einer Befestigungsstelle, folgende Schritte aufweist:
a) Befestigung eines Grundbalkens (1a) an einem Fundament (4) mit Hilfe einer Befestigungsschraube (5), die einen Schraubgewindeschaft (50) hat, wobei der Schaft (50) einen konischen, mit Schraubgewinde versehenen Bereich (51) hat, der durch ein Loch (12a) im Grundbalken (1a) verläuft und in das Fundament (4) eingreift, wobei die Befestigungsschraube (5) einen Kopf, der einen Mutternabschnitt (52) mit Innengewinde einschließt, und eine Scheibe (53) hat, die zwischen dem Mutternabschnitt (52) und dem Schaft (50) angeordnet ist und die nach unten gegen den darunterliegenden Grundbalken (1a) drückt,
b) Aufbringen eines anderen Balkens (1) auf den Grundbalken (1a),
c) Befestigung des anderen Balkens (1) an dem Grundbalken (1a) unter Verwendung eines Klemmbolzens (2), der einen Schraubgewindeschaft (20) hat, der durch ein Loch (12) in dem anderen Balken (1) führt und in den Mutternabschnitt (52) der Befestigungsschraube (5) eingreift, wobei der Klemmbolzen (2) einen Kopf, der einen Mutternabschnitt (22) mit Innengewinde einschließt und eine Scheibe (23) hat, die zwischen dem Mutternabschnitt (22) und dem Schaft (20) angeordnet ist und die nach unten gegen den anderen, darunter befindlichen Balken (1) drückt, und
d) Aufbringen und Befestigung jedes einzelnen von weiteren aufeinanderfolgenden Balken auf die/den darunterliegenden Balken unter Verwendung von weiteren Klemmbolzen auf eine zu den Schritten (b) und (c) analoge Weise, bis die resultierende Wand die erforderliche Höhe hat.

2. Verfahren nach Anspruch 1, **dadurch gekennzeichnet, daß** der Schaft, der Mutternabschnitt und die Scheibe der Befestigungsschraube (5) und/oder des Klemmbolzens (2) als ein Ganzes ausgeführt sind.

3. Verfahren nach Anspruch 1 oder Anspruch 2, das den weiteren Schritt der Bereitstellung von wenigstens einem Dichtungsstreifen (6) zwischen aufeinanderliegenden Balken (1, 1a) aufweist, so daß der wenigstens eine Dichtungsstreifen (6) kräftig zusammengedrückt wird, wenn der Klemmbolzen (2) oder die Schraube (5) zum Festklemmen des Balkens (1, 1a) angezogen werden, um eine Dichtung zwischen den Balken (1, 1a) bereitzustellen.

4. Verfahren nach einem der vorhergehenden Ansprüche, das den weiteren Schritt der Bereitstellung einer Dichtungsmasse zwischen aufeinanderliegenden Balken (1, 1a) aufweist.

5. Verfahren nach einem der vorhergehenden Ansprüche, das den weiteren Schritt der Bereitstellung von Mitteln zur Verhinderung des Knickens des Klemmbolzens (2) und/oder der Befestigungsschraube (5) in einer Lücke zwischen dem Schaft (20, 50) und der Wandung des entsprechenden Lochs (12,12a) aufweist.

6. Verfahren nach Anspruch 5, **dadurch gekennzeichnet, daß** das Knick-Verhinderungsmittel einen Bereich mit vergrößertem Durchmesser des Schaftes des Klemmbolzens (2) und/oder der Befestigungsschraube (5) aufweist.

7. Verfahren nach Anspruch 5, **dadurch gekennzeichnet, daß** das Knick-Verhinderungsmittel einen Füllstoff (9) in der Lücke zwischen dem Klemmbolzen (2) und/oder der Befestigungsschraube (5) und der Wandung des entsprechenden Lochs (12, 12a) umfaßt.

8. Verfahren nach Anspruch 7, **dadurch gekennzeichnet, daß** der Füllstoff (9) Sand ist.

9. Verfahren nach Anspruch 7, **dadurch gekennzeichnet, daß** der Füllstoff (9) eine zylindrische Einlage ist.

10. Verfahren nach Anspruch 5, **dadurch gekennzeichnet, daß** das Knick-Verhinderungsmittel eine Platte (8) umfaßt, die um den Schaft (20, 50) des Klemmbolzens (2) und/oder der Befestigungsschraube (5) verläuft.

11. Verfahren nach einem der vorhergehenden Ansprüche, **dadurch gekennzeichnet, daß** die Scheibe (23, 53) mit einer Klaue oder einem Dom (24, 54) versehen ist, die in die Unterseite des darüberliegenden Balkens (1) einstechen, um diesen so in seiner Position zu sichern und die Drehung des Klemmbolzens oder der Befestigungsschraube (2, 5), denen diese zugeordnet sind, zu verhindern, wenn der Bolzen (2) in dem darüberliegenden Balken (1) gedreht wird.

12. Klemmelement (2, 5) für den Einsatz im Verfahren nach Anspruch 11, das folgendes aufweist: einen Schaft (20, 50) mit einem Schraubgewindebereich (21, 51), einen Kopf mit einem Mutternabschnitt (22, 52) mit Innengewinde, der eine Aussparung (25, 55) mit Innengewinde für die Aufnahme eines Schraubgewindeschaftes (21, 51) eines anderen Klemmelements (2) hat, und eine Scheibe (23, 53), die zwischen dem Schaft (20, 50) und dem Kopf angeordnet ist, wobei die Scheibe (23, 53) eine Klaue oder einen Dorn (24, 54) hat, die in einer Richtung weg vom Schaft (20, 50) vorstehen.

13. Klemmelement nach Anspruch 12, **dadurch gekennzeichnet, daß** der Schaft (20, 50), der Kopf (22, 52) und die Scheibe (23, 53) als ein Ganzes ausgeführt sind.

14. Klemmelement nach Anspruch 12 oder 13, das eine Befestigungsschraube (5) ist und worin der Schaft (50) einen konischen Schraubgewindebereich (51) hat.

15. Klemmelement nach Anspruch 12 oder 13, das ein Klemmbolzen (2) ist und worin der Schaft (20) einen Schraubgewindebereich (21) hat, der mit der Aussparung (25, 55) mit Innengewinde eines anderen Klemmelements (2, 5) ineinandergreifen kann.

16. Klemmelement nach einem der Ansprüche 12 bis 15, **dadurch gekennzeichnet, daß** eine Platte (8) um den Schaft (20, 50) des Klemmelements (2, 5) verläuft.

17. Klemmelement nach einem der Ansprüche 12 bis 16, das für den Einsatz im Verfahren nach einem der Ansprüche 1 bis 11 konstruiert und geeignet ist.

18. Bausatz von Teilen, der für den Einsatz bei einem Verfahren nach einem der Ansprüche 1 bis 11 geeignet ist, der folgendes umfaßt:
eine Vielzahl von Balken (1, 1a),
eine Vielzahl von Befestigungsschrauben (5), die jeweils einen Schaft (50) mit einem konischen Schraubgewindebereich (51), einen Kopf, einschließlich eines Mutternabschnitts (52) mit Innengewinde, und eine Scheibe (53) haben, die zwischen dem Kopf und dem Schaft (50) angeordnet ist, und
eine Vielzahl von Klemmbolzen (2), die jeweils einen Schaft (20) mit einem Schraubgewindebereich (21), einen Kopf, einschließlich eines Mutternabschnitts (22) mit Innengewinde, und eine Scheibe (23) haben, die zwischen dem Kopf und dem Schaft (20) angeordnet ist.

## Revendications

1. Procédé pour l'assemblage d'une paroi de rondins (3) pour une maison en bois, comprenant, à l'endroit d'une fixation, les étapes consistant à :
(a) fixer un rondin de base (1a) sur une base (4) au moyen d'une vis de fixation (5) possédant une tige filetée (50), la tige (50) étant pourvue d'une zone conique filetée (51) s'étendant à travers un trou (12a) dans le rondin de base (1a) et se mettant en prise dans la base (4), ladite vis de fixation (5) ayant une tête qui inclut une partie d'écrou (52) à filet intérieur et une rondelle (53) qui est située entre la partie d'écrou (52) et la tige (50) et qui appuie contre le rondin de base (1a) sous-jacent,
(b) placer un autre rondin (1) sur le rondin de base (1a),
(c) fixer ledit autre rondin (1) sur le rondin de base (1a) en utilisant un boulon de fixation (2) possédant une tige filetée (20) qui passe à travers un trou (12) dans ledit autre rondin (1) et se met en prise avec la partie d'écrou (52) de la vis de fixation (5), ledit boulon de fixation (2) ayant une tête qui inclut une partie d'écrou (22) à filet intérieur et une rondelle (23) qui est située entre la partie d'écrou (22) et la tige (20) et qui appuie contre ledit autre rondin (1) situé au-dessous, et
(d) placer et fixer chacun des rondins suivants successifs sur les rondins sous-jacents en utilisant d'autres boulons de fixation de manière analogue aux étapes (b) et ( c ) jusqu'à ce que la paroi obtenue ait la hauteur requise.

2. Procédé selon la revendication 1, **caractérisé par** le fait que la tige, la partie d'écrou et la rondelle de la vis de fixation (5) et/ou du boulon de fixation (2) sont de construction unitaire.

3. Procédé selon la revendication 1 ou la revendication 2, comprenant, en outre, l'étape consistant à prévoir entre deux rondins contigus (1, 1a) au moins une bande d'étanchéité (6), de manière à ce que, lorsque le boulon de fixation (2) ou la vis (5) est serré/e pour fixer le rondin (1, 1a), ladite au moins une bande d'étanchéité (6) soit comprimée de force afin de fournir un joint étanche entre les rondins (1, 1a).

4. Procédé selon l'une quelconque des revendications précédentes, comprenant, en outre, l'étape consistant à prévoir un composé de calfatage entre des rondins contigus (1, 1a).

5. Procédé selon l'une quelconque des revendications précédentes, comprenant, en outre, l'étape consistant à prévoir un moyen pour empêcher que le boulon de fixation (2) et/ou la vis de fixation (5) se déforment dans un intervalle entre la tige (20, 50) et la paroi du trou respectif (12, 12a).

6. Procédé selon la revendication 5, **caractérisé par** le fait que ledit moyen empêchant la déformation comprend une zone de la tige du boulon de fixation (2) et/ou de la vis de fixation (5) dont le diamètre est élargi.

7. Procédé selon la revendication 5, **caractérisé par** le fait que ledit moyen empêchant la déformation comprend une masse de remplissage (9) dans l'intervalle entre le boulon de fixation (2) et/ou la vis de fixation (5) et la paroi du trou respectif (12, 12a).

8. Procédé selon la revendication 7, **caractérisé par** le fait que ladite masse de remplissage (9) est du sable.

9. Procédé selon la revendication 7, **caractérisé par** le fait que ladite masse de remplissage (9) est un coussin cylindrique.

10. Procédé selon la revendication 5, **caractérisé par** le fait que ledit moyen empêchant la déformation comprend une plaque (8) qui s'étend autour de la tige (20, 50) dudit boulon de fixation (2) et/ou vis de fixation (5).

11. Procédé selon l'une quelconque des revendications précédentes, **caractérisé par** le fait que la rondelle (23, 53) est pourvue d'une griffe ou pointe (24, 54) qui perce le côté inférieur du rondin (1) situé au-dessus de manière à le fixer dans sa position et à empêcher la rotation du boulon de fixation ou de la vis de fixation (2, 5) auquel/à laquelle il est associé lorsque le boulon (2) dans le rondin (1) situé au-dessus subit une rotation.

12. Elément de fixation (2, 5) destiné à être utilisé dans le procédé selon la revendication 11, comprenant une tige (20, 50) qui possède une zone filetée (21, 51), une tête pourvue d'une partie d'écrou (22, 52) à filet intérieur, ladite partie d'écrou (22, 52) étant pourvue d'un creux (25, 55) à filetage intérieur destiné à recevoir une tige filetée (21, 51) d'un autre élément de fixation (2), et une rondelle (23, 53) située entre ladite tige (20, 50) et ladite tête, dans lequel la rondelle (23, 53) est pourvue d'une griffe ou pointe (24, 54) faisant saillie dans une direction qui s'éloigne de la tige (20, 50).

13. Elément de fixation selon la revendication 12, **caractérisé par** le fait que la tige (20, 50), la tête (22, 52) et la rondelle (23, 53) sont de construction unitaire.

14. Elément de fixation selon la revendication 12 ou 13, qui est une vis de fixation (5), et dans lequel la tige (50) est pourvue d'une zone conique filetée (51).

15. Elément de fixation selon la revendication 12 ou 13, qui est un boulon de fixation (2), et dans lequel la tige (20) est pourvue d'une zone filetée (21) qui peut se mettre en prise avec le creux (25, 55) à filetage intérieur d'un autre élément de fixation (2, 5).

16. Elément de fixation selon l'une quelconque des revendications 12 à 15, **caractérisé par** le fait qu'une plaque (8) s'étend autour de ladite tige (20, 50) dudit élément de fixation (2, 5).

17. Elément de fixation selon l'une quelconque des revendications 12 à 16, construit et adapté pour être utilisé dans le procédé selon l'une quelconque des revendications 1 à 11.

18. Jeu de pièces adaptées pour être utilisées dans un procédé selon l'une quelconque des revendications 1 à 11, comprenant :
une pluralité de rondins (1, 1a) ;
une pluralité de vis de fixation (5) possédant chacune une tige (50) pourvue d'une zone conique filetée (51), une tête incluant une partie d'écrou (52) à filet intérieur et une rondelle (53) qui est située entre ladite tête et ladite tige (50) ; et
une pluralité de boulons de fixation (2) possédant chacun une tige (20) pourvue d'une zone filetée (21), une tête incluant une partie d'écrou (22) à filet intérieur et une rondelle (23) qui est située entre ladite tête et ladite tige (20).
